# EUROPEAN PATENT SPECIFICATION

(11) **EP 1 208 739 B1**
(45) Date of publication and mention of the grant of the patent: **28.03.2007**
(21) Application number: 01204409.5
(22) Date of filing: 19.11.2001
(51) Int. Cl.: A01G 9/02, A01G 9/12

(54) **Flowerpot and support stick assembly for the same**
Blumentopf und dafür geeignete Pflanzenstabanordnung
Pot de fleur et assemblage de tuteurs pour celui-ci

(30) Priority: 17.11.2000 NL 1016637
(43) Date of publication of application: 29.05.2002
(73) Proprietor: Van der Starre, Huibert, 2742 KV Waddinxveen (NL)
(72) Inventor: Van der Starre, Huibert, 2742 KV Waddinxveen (NL)
(74) Representative: van Westenbrugge, Andries

(56) References cited:
- BE-A- 670 665
- CH-A- 301 362
- DE-U- 8 713 185
- DE-U- 29 600 019
- FR-A- 2 668 128

## Description

The present invention relates to a flowerpot according to the preamble of claim 1.

A flowerpot of this type is disclosed in BE 670 665 A. With this known flowerpot the cross-sectional surface at the upper boundary is square and the pot is circular at the bottom. A wide variety of types of plants are placed in such flowerpots and after placing (and/or cultivating) transported via the trade to the end user. In this context it is important that, on the one hand, transport takes place as efficiently as possible and, on the other hand, the appearance of the plant concerned in the pot is optimised as far as possible. Furthermore, the appearance must be so optimised to stimulate consumer interest as much as possible. This applies not only for the consumer but also for the (distributive) trade.

German Gebrauchsmuster (utility model) 8 713 185 discloses a plant trough which has a rectangular cross-section both at the top and at the bottom.

The aim of the present invention is to provide an improved flowerpot that meets the abovementioned requirements.

This aim is realised with a flowerpot having the features of claim 1.

In this way transport means such as auction trolleys can be used in an optimum manner. The pots adjacent to one another support one another. Moreover, when stored on a larger surface the pots can not only be positioned staggered with respect to one another but also in rows. This is in contrast to flowerpots according to the state of the art, which are of completely round construction and are always staggered. Arranging in straight rows gives a more attractive appearance and makes it possible to position more pots per unit surface area.

Because the pots are rectangular consumer interest can be promoted by placing the long side perpendicularly to the field of view of the purchaser. It has been found that when a given plant is in such a pot the plant appears larger and more fully grown and filled out.

For a given transport surface area, the impression is created that larger plants are being transported with the present invention.

The transition from the upper boundary to the base is made as smooth as possible.

The pot is preferably constructed such that it tapers somewhat towards the base. This is important in particular in order to make injection moulding with a relatively simple mould possible in a simple manner. The angle of inclination is chosen to be as small as possible in order to make the surface of the base as large as possible. The flowerpot can be produced by injection moulding using any material known in the state of the art, such as polypropene. The peripheral rim at the upper boundary can be flanged and a number of reinforcing ribs can be present between the flanged part and the actual wall part of the flowerpot.

The invention also relates to a flowerpot/support stick assembly comprising a flowerpot which has a rectangular cross-sectional surface at the upper boundary and the support stick assembly comprises at least four sticks, said sticks being arranged close to the corners of said rectangle.

Such a positioning of the support sticks in the corners can be implemented both with pots which have a rectangular upper boundary and with pots which have a square upper boundary. Surprisingly, it has been found that placing the support sticks in the corners results in a fuller appearance of the product.

The support sticks concerned can be joined to one another close to the free ends thereof, that is to say the ends that are not pushed into the substrate. A central support stick can optionally be present.

The flowerpot described above can have any length, depending on the plant to be accommodated therein. This length is also dependent on the desired cross-sectional surface area. A value of approximately 20 cm is mentioned as an example.

The invention will be explained in more detail below with reference to an illustrative embodiment shown in the drawing. In the drawing:
Fig. 1 shows, diagrammatically, a perspective and partially exposed view of a flowerpot provided with support sticks according to the invention;
Fig. 2 shows a section along the line II - II in Fig. 1;
Fig. 3 shows a section along the line III - III in Fig. 1; and
Fig. 4 shows a section along the line IV - IV in Fig. 1.

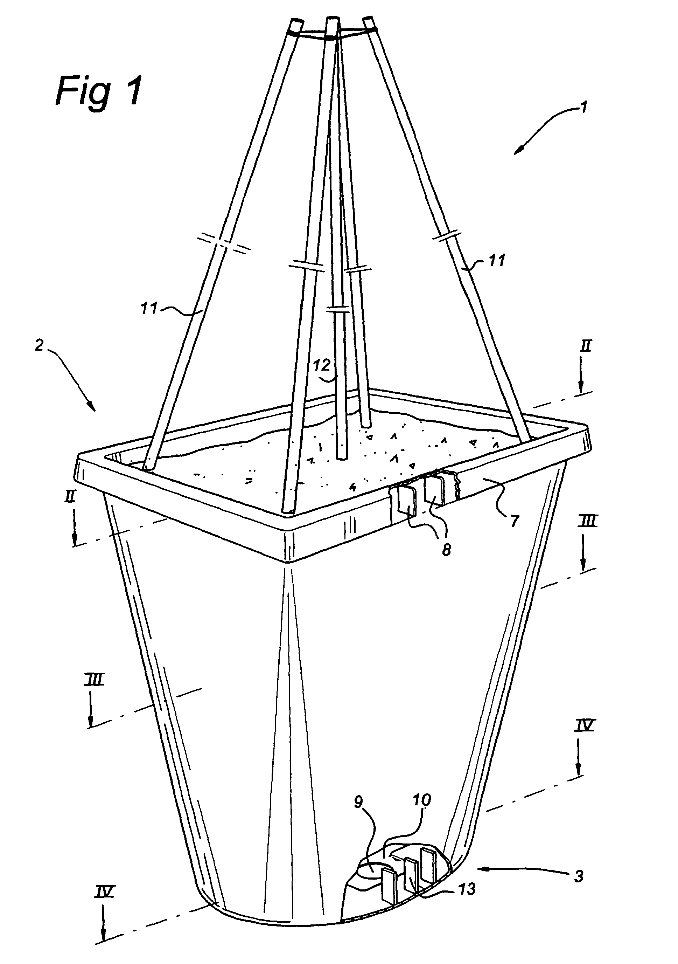

In Fig. 1 a flowerpot according to the invention is indicated in its entirety by 1. The flowerpot consists of a top section 2 and a base section 3. The top section 2 is provided with a flanged peripheral rim 7. The strength of this peripheral rim is increased by the presence of a number of reinforcing ribs arranged around the periphery. Support sticks 11 (shown only in part) are arranged close to the corners of the top section 2, whilst a central support stick 12 is present. Close to the free ends thereof, these support sticks are joined to one another and, apart from supporting the plant present (not shown), they can also serve for attaching an information brochure or the like thereto.

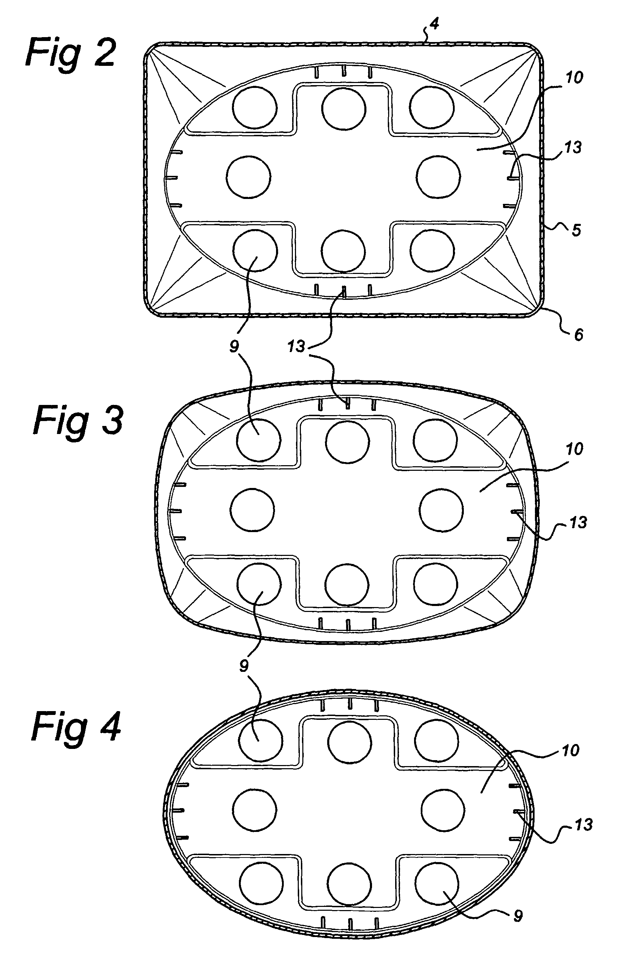

The shape of the flowerpot 1 according to the invention can be seen in detail from Figs 2 - 4. It can be seen from Fig. 2 that the upper boundary is essentially rectangular, the long side being indicated by 4 and the short side by 5. In the illustrative embodiment shown here the short side is approximately 100 mm long and the long side 4 has a length of approximately 140 mm. The cross-section of the base is indicated in Fig. 4. This cross-section is elliptical, the long axis of the ellipse being approximately 120 mm and the short axis 80 mm. A number of openings 9 have been made, as well as a lowered section 10. In this way the pots can be placed in trays and an ebb-and-flow system can be used. Moreover, water discharge is always possible.

Fig. 3 shows the transition region between the rectangle shown in Fig. 2 and the ellipse shown in Fig. 4. As can be seen from this figure, and also from Figure 1, the transition from rectangle to ellipse takes place as smoothly as possible.

The configuration described above is such that stacking of flowerpots is possible. Stacking ridges 13 are provided on the inside for this purpose.

Although the invention has been described above with reference to a preferred embodiment, it will be understood that numerous modifications can be made thereto without going beyond the scope of the present application. For instance, it is possible to construct the transition between the rectangular top section and the elliptical bottom section in some other way. The elliptical section will be constructed depending on the angle of inclination, which does not always have to be the same. These and further modifications which are obvious to those skilled in the art fall within the scope of the appended claims.

## Claims

1. Flowerpot (1), the cross-sectional surface of which at the upper boundary comprises four straight lines (4, 5), each two opposing lines being essentially parallel, and the cross-sectional surface of which at the base (3) comprises a curve that encompasses at least 50 % of the circumference at that location, **characterised in that** the cross-section of said upper boundary comprises a rectangle and said curve comprises an ellipse, wherein the long axis of said ellipse is at least 20 % longer than the short axis thereof.

2. Flowerpot according to Claim 1, wherein the long axis of said ellipse is at most 50 % longer than said short axis.

3. Flowerpot according to one of the preceding claims, wherein the transition from the cross-sectional surface of the upper boundary to the cross-section of the base is essentially continuous on all sides.

4. Flowerpot according to one of the preceding claims, wherein the length of the shortest side of the upper boundary is approximately half the height.

5. Flowerpot/support stick assembly, **characterised in that**, it comprises a flowerpot according to one of the preceding claims, and comprising support sticks said support sticks being arranged close to the corners of said rectangle.

6. Flowerpot/support stick assembly according to Claim 5, wherein at least two of said support sticks are joined to one another close to the free ends thereof.

7. Flowerpot/support stick assembly according to Claim 5 or 6, having at least a further support stick (12) arranged centrally with respect to said four support sticks (11).

## Patentansprüche

1. Blumentopf (1), bei dem die Querschnitts-Fläche an dem oberen Rand vier gerade Linien (4, 5) aufweist, wobei jeweils zwei gegenüberliegende Linien im Wesentlichen parallel sind, und die Querschnitts-Fläche an dem Grund (3) eine Kurve, die mindestens 50% des Umfangs an dieser Stelle umfasst, aufweist
**dadurch gekennzeichnet, dass** der Querschnitt des oberen Randes ein Rechteck aufweist, und die Kurve eine Ellipse aufweist, wobei die lange Achse der Ellipse mindestens 20% länger als die kurze Achse davon ist.

2. Blumentopf nach Anspruch 1, wobei die lange Achse der Ellipse mindestens 50% länger als die kurze Achse ist

3. Blumentopf nach einem der vorhergenden Ansprüche, wobei der Übergang von der Querschnitts-Fläche des oberen Randes zu dem Querschnitt des Grundes an allen Seiten im Wesentlichen kontinuierlich ist.

4. Blumentopf nach einem der vorhergenden Ansprüche, wobei die Länge der kürzesten Seite des oberen Randes ungefähr die halbe Höhe ist.

5. Blumentopf / Haltestabs-Anordnung, **dadurch gekennzeichnet, dass** es einen Blumentopf gemäß einem der vorhergehenden Ansprüche und Haltestäbe aufweist, wobei die Haltestäbe nahe der Ecken des Rechtecks angeordnet sind.

6. Blumentopf / Haltestabs-Anordnung nach Anspruch 5, wobei mindestens zwei der Haltestäbe miteinander, nahe zu den freien Enden davon, verbunden sind.

7. Blumentopf / Haltestabs-Anordnung nach Anspruch 5 oder 6, wobei mindestens ein weiterer Haltestab (12) zentral bezüglich der vier Haltestäbe (11) angeordnet ist.

## Revendications

1. Un pot de fleur (1), dont la surface transversale au niveau de la bordure supérieure comprend quatre lignes droites (4, 5), chacune des deux lignes opposées étant sensiblement parallèles, et dont la surface transversale au niveau de la base (3) comprend une courbure qui englobe au moins 50 % de la circonférence à cet emplacement, **caractérisé en ce que** la section transversale de ladite bordure supérieure comprend un rectangle, et ladite courbure comprend une ellipse, dans lequel le grand axe de ladite ellipse est plus long que le petit axe de celle-ci d'au moins 20 %.

2. Un pot de fleur selon la revendication 1, dans lequel le grand axe de ladite ellipse est plus long de 50 % au plus que ledit petit axe.

3. Un pot de fleur selon l'une des revendications précédentes, dans lequel la transition entre la surface transversale de la bordure supérieure et la section transversale de la base est sensiblement continue sur tous les côtés.

4. Un pot de fleur selon l'une des revendications précédentes, dans lequel la longueur du plus petit côté de la bordure supérieure représente approximativement la moitié de la hauteur.

5. Un ensemble de pot de fleur / tuteur, **caractérisé en ce qu'**il comprend un pot de fleur selon l'une des revendications précédentes, et comprenant des tuteurs, lesdits tuteurs étant disposés près des coins dudit rectangle.

6. Un ensemble de pot de fleur / tuteur selon la revendication 5, dans lequel au moins deux desdits tuteurs sont raccordés l'un à l'autre près de leur extrémité libre.

7. Un ensemble de pot de fleur / tuteur selon les revendications 5 ou 6, ayant au moins un tuteur supplémentaire (12) disposé en position centrale par rapport auxdits quatre tuteurs (11).
